# EUROPEAN PATENT SPECIFICATION

(11) **EP 4 103 658 B1**
(45) Date of publication and mention of the grant of the patent: **01.07.2026**
(21) Application number: 21708302.1
(22) Date of filing: 12.02.2021
(51) Int. Cl.: C09K 5/04

(54) **COMPOSITIONS**
ZUSAMMENSETZUNGEN
COMPOSITIONS

(30) Priority: 14.02.2020 GB 202002063
(43) Date of publication of application: 21.12.2022
(73) Proprietor: Mexichem Fluor S.A. de C.V., San Luis Potosi, S.L.P. C.P. 78395 (MX)
(72) Inventor: LOW, Robert E., Cheshire WA7 4QX (GB)
(74) Representative: Potter Clarkson
(86) International application number: PCT/GB2021/050347
(87) International publication number: WO 2021/161036

(56) References cited:
- EP-A1- 0 770 113
- WO-A1-2017/151488
- WO-A1-2019/074735
- WO-A1-2019/102003
- WO-A1-2020/035689
- WO-A1-2020/165569
- US-A1- 2011 162 410
- US-A1- 2015 315 446
- US-A1- 2016 215 193
- US-B2- 10 144 855

## Description

The present invention relates to compositions for use as an alternative for existing working fluids in air-conditioning and refrigeration applications. The compositions disclosed herein are especially useful in heat pump water heaters, air-conditioning systems for trains, buses, cars and trucks, commercial refrigeration systems including supermarket display systems and cold rooms (such as walk-in fridges and freezers), and transportation refrigeration systems.

The listing or discussion of a prior-published document or any background in the specification should not necessarily be construed as an acknowledgement that a document or background is part of the state of the art or is common general knowledge.

Carbon dioxide (CO₂, R-744) is finding favour as a low Global Warming Potential (GWP) refrigerant for applications where non-flammability of refrigerant is required. These applications include air-conditioning systems for trains, buses, cars and trucks; heat pump-water heater systems; commercial refrigeration systems including supermarket display systems and cold-rooms, and transportation refrigeration systems fitted to refrigerated shipping containers or trucks.

CO₂ has two main disadvantages compared to other fluorocarbon refrigerants in use in the same applications. Firstly, it suffers from low energy efficiency in ambient temperatures of above about 25 to 30°C. Secondly, its operating pressures are much higher than those of traditional fluorocarbon-based systems.

Non-flammable refrigerant mixtures comprising difluoromethane (R-32) and CO₂ have been proposed (see Adams et al. (J. Chem. Eng. Data 16 (1971) 146-149) and US 7238299B). Such non-flammable compositions can contain up to about 60% R-32 by weight.

However, such binary refrigerant compositions, whilst non-flammable as formulated, would still be considered as flammable according to ASHRAE Standard 34 (2019). This is because the mixtures are non-azeotropic. ASHRAE Standard 34 requires that the outcome of a series of vapour leakage experiments at a range of temperatures from -40°C to 60°C is considered to identify whether leakage can generate a more flammable composition than the "as-formulated" composition. When this is done for non-flammable binary mixtures of R-32 with CO₂, a vapour leakage at -40°C will result in generation of a flammable composition, as the more volatile CO₂ is preferentially removed from the system, causing fractionation of the remaining material so that it contains more than 60% R-32.

Therefore, it would be desirable to identify refrigerant compositions which address these problems, whilst preferably retaining the non-flammability of pure CO₂. Such compositions should preferably also have a low GWP. In particular, a GWP of about 150 or less would be required under the European Union F-Gas Regulations for certain applications, such as air-conditioning systems in passenger cars or self-contained refrigeration appliances.

US 2011/162410 is directed to a heat transfer composition comprising trans-1,3,3,3-tetrafluoropropene (R-1234ze(E)), carbon dioxide (R-744) and a third component selected from difluoromethane (R-32), 1,1-difluoroethane (R-152a), fluoroethane (R-161), 1,1,1,2-tetrafluoroethane (R-134a), propylene, propane and mixtures thereof.

US 2016/215193 relates to a heat transfer composition comprising (i) a first component selected from trans-1,3,3,3-tetrafluoropropene (R-1234ze(E)), cis-1,3,3,3-tetrafluoropropene (R-1234ze(Z)) and mixtures thereof; (ii) carbon dioxide (R-744); and (iii) a third component selected from difluoromethane (R-32) 1,1,1,2-tetrafluoroethane (R-134a) and mixtures thereof.

WO 2017/151488 discloses refrigerant compositions which comprise HFC-32, HFC-125, HFO-1234yf, HFC-134a, and CO₂.

WO 2019/074735 describes refrigerant compositions which comprise a refrigerant mixture consisting essentially of HFC-32, HFO-1234yf, and CO₂.

WO 2019/102003 is directed to a refrigerant composition consisting essentially of ranges of amounts of CO₂, R-32, R-125, R-227ea, R-134a and an HFO selected from the group consisting of R-1234yf and R-1234ze(E).

EP 0770113 relates to a non-azeotropic refrigerant composition comprising (A) carbon dioxide, (B) at least one hydrofluorocarbon selected from the group consisting of 1,1,1,2-tetrafluoroethane and 1,1,2,2-tetrafluoroethane, and (C) at least one hydrofluorocarbon selected from the group consisting of difluoromethane, 1,1,1-trifluoroethane and pentafluoroethane.

US 2015/315446 is directed to a heat transfer composition comprising (a) from about 17% to about 40% by weight of HFC-32; (b) from about 51% to about 83% by weight of 2,3,3,3-tetrafluoropropene; and (c) from greater than about 0% to less than about 9% by weight of CO₂.

US 10144855B2 discloses a working fluid composition for a refrigerant machine which comprises a refrigerant comprising a first refrigerant component and a second refrigerant component, and having a global warming potential (GWP) of 500 or less, wherein the first refrigerant component is at least one selected from difluoromethane and tetrafluoropropene, and the second refrigerant component is at least one selected from carbon dioxide and a hydrocarbon having 3 to 4 carbon atoms.

The present invention addresses the above and other deficiencies, and the above needs, by the provision of a use of a composition as an alternative for an existing working fluid in a heat transfer system, wherein the composition comprises: from about 62 to about 98 weight % carbon dioxide (CO₂, R-744), difluoromethane (R-32), and a third component selected from 1,1,1,2-tetrafluoroethane (R-134a), trans-1,3,3,3-tetrafluoropropene (R-1234ze(E)), 2,3,3,3-tetrafluoropropene (R-1234yf), 1,1,1,2,3,3,3-heptafluoropropane (R-227ea) and mixtures thereof, wherein the existing working fluid is R-410A or R-407C, further wherein the composition comprises substantially no 1,1,2-trifluoroethylene (R-1123).

Such compositions will be referred to hereinafter as "the compositions for use in the (present) invention".

The present inventor has found that relatively minor amounts of other components (especially R-134a) may be added to CO₂ and R-32 to ensure that the resulting mixture will not fractionate to a flammable composition when analysed according to the ASHRAE Standard 34 protocol. Furthermore, minor amounts of a flammable species (e.g. R-1132a) may also be added to the mixtures for use in the present invention without generating a flammable composition.

The compositions for use in the present invention are believed to be especially useful in heat transfer systems (e.g. refrigeration, air-conditioning and heat pump systems) utilising a transcritical refrigeration cycle. The basic transcritical cycle consists of the following steps:
(a) Evaporation of a liquid refrigerant at low pressure to remove heat from a low temperature source fluid (such as air);
(b) Compression of the resultant refrigerant vapour in a compressor to yield a hot, high pressure gas;
(c) Cooling of the high-pressure gas by heat exchange with a sink fluid, at higher temperature than the source, to yield a cooler, dense refrigerant gas at high pressure. This gas is said to be a "supercritical" fluid, since it is above its critical temperature; and
(d) Expansion of the supercritical fluid through an expansion valve or other restriction device to give a two-phase mixture of liquid refrigerant with vaporised refrigerant vapour at low pressure; this mixture is then fed back to the evaporator stage (a) to complete the cycle.

Optionally, in such a cycle there occurs an internal heat exchange process between the warm high-pressure gas leaving the gas cooler, and the cool vapour flowing from the evaporator to the compressor. This process takes place in an "internal heat exchanger" ("IHX") and has the effect of boosting the refrigeration capacity and efficiency of the cycle.

Conveniently, such a transcritical refrigeration cycle may also contain a liquid accumulator positioned after the evaporator (and before the IHX, if one is used). This serves to hold excess charge of refrigerant when the external ambient temperature is such that the gas cooler pressure is reduced.

The compositions for use in the present invention have also been found to be suitable for use in such cycles, whether incorporating IHX or accumulator features or not.

The compositions for use in the present invention will now be described in detail.

According to the present invention, there is provided the use of a composition as an alternative for an existing working fluid in a heat transfer system, wherein the composition comprises: from about 62 to about 98 weight % CO₂, R-32 and a third component selected from 1,1,1,2-tetrafluoroethane (R-134a), trans-1,3,3,3-tetrafluoropropene (R-1234ze(E)), 2,3,3,3-tetrafluoropropene (R-1234yf), 1,1,1,2,3,3,3-heptafluoropropane (R-227ea) and mixtures thereof, wherein the existing working fluid is R-410A or R-407C, further wherein the composition comprises substantially no 1,1,2-trifluoroethlyene (R-1123).

In one aspect of the present invention, the third component is R-134a and one or more of R-1234yf, R-1234ze(E) and R-227ea.

In a further aspect of the present invention, the third component is one or more of R-1234yf or R-1234ze(E).

In yet another aspect of the present invention, the third component is one or more of R-1234yf, R-1234ze(E) and R-227ea.

Typically, the compositions for use in the present invention comprise from about 65 to about 98 weight % CO₂, such as from about 69 or about 71 to about 97 weight %, for example from about 74 or about 77 to about 96 weight % or from about 81 to about 96 weight %, optionally from about 81 or about 84 to about 95 weight %.

Typically, the compositions for use in the present invention comprise from about 1 to about 25 weight % R-32, such as from about 2 to about 22 weight %, for example from about 3 to about 19 weight %, optionally from about 4 weight % to about 15 or about 13 weight % or from about 5 weight % to about 11 weight %

Conveniently, the compositions for use in the invention comprise from about 1 to about 20 weight % of the third component, such as from about 2 or about 3 to about 15 weight %, for example from about 4 to about 13 weight %, optionally from about 5 to about 11 weight %.

In one embodiment, the compositions for use in the invention comprise, optionally consist essentially of, from about 65 to about 95 weight % CO₂, from about 5 to about 15 weight % R-32 and from about 2 to about 20 weight % R-134a.

In such compositions, preferably the CO₂ is present in amount of from about 70 to about 91 weight %, the R-32 is present in an amount of from about 6 to about 14 weight % and the R-134a is present in an amount of from about 3 to about 16 weight %. For instance, in such compositions the CO₂ is present in amount of from about 72 to about 88 weight %, the R-32 is present in an amount of from about 8 to about 13 weight % and the R-134a is present in an amount of from about 4 to about 15 weight %.

The compositions for use in the present invention may additionally comprise 1,1-difluoroethylene (R-1132a).

When present, the compositions for use in the invention comprise from about 1 to about 20 weight % R-1132a, such as from about 2 to about 15 weight %, for example from about 3 to about 12 weight % or from about 4 or about 5 to about 10 weight %.

The compositions for use in the invention typically do not contain 1,1,2-trifluoroethylene (R-1123). Various refrigerant compositions comprising R-1123 are known in the art. Although one advantage of using R-1123 in such compositions is that it gives similar capacity to R-32, at the same time having negligible GWP, it may only be safely used as a diluted component in many refrigerant compositions. It is believed that the inclusion of R-1123 in the compositions for use in the present invention can cause problems with stability of the compositions and therefore lead to safety concerns regarding the use of such compositions.

Furthermore, in the course of development, the present inventors have found that while the inclusion of R-1123 in the compositions for use in the invention gives similar capacity as compared to using an equivalent molar quantity of R-32, it reduces the energy efficiency of the compositions. When considering the overall environmental impact of a system using these compositions (which is a combination of the effect of leakage of the refrigerant ("direct emission" of greenhouse gas) and the energy efficiency of the refrigerant leading to CO₂ emissions from fuel or energy usage ("indirect emissions" of greenhouse gas)), the marginal reduction in GWP available from use of R-1123 is more than offset by the reduction in energy efficiency. Accordingly, R-1123 is not included in the compositions for use in the invention.

Accordingly, the compositions for use in the invention are substantially free of R-1123. For example, the compositions for use in the invention contain no readily detectable R-1123. In a preferred embodiment, such compositions contain no R-1123.

In one embodiment, the compositions for use in the present invention consist essentially of the stated components. By the term "consist essentially of", we include the meaning that the compositions of the invention contain substantially no other components, particularly no further (hydro)(fluoro)compounds (e.g. (hydro)(fluoro)alkanes or (hydro)(fluoro)alkenes)) known to be used in heat transfer compositions. The term "consist of" is included within the meaning of "consist essentially of".

In one embodiment, the compositions for use in the invention are substantially free of any component that has heat transfer properties (other than the components specified). For instance, the compositions may be substantially free of any other hydrofluorocarbon compound.

By "substantially no" and "substantially free of" we include the meaning that the compositions for use in the invention contain 0.5% by weight or less of the stated component, preferably 0.4%, 0.3%, 0.2%, 0.1% or less, based on the total weight of the compositions.

As used herein, all % amounts mentioned in the compositions herein, including in the claims, are by weight based on the total weight of the composition, unless otherwise stated.

By the term "about", as used in connection with numerical values of amounts of component in % by weight, we include the meaning of ± 0.5 weight %, for example ± 0.2 weight %.

For the avoidance of doubt, it is to be understood that the stated upper and lower values for ranges of amount of components in the compositions for use in the invention described herein may be interchanged in any way, provided that the resulting ranges fall within the broadest scope of the invention.

The compositions for use in the present invention have zero ozone depletion potential.

Typically, the compositions for use in the invention have a Global Warming Potential (GWP) of less than about 300, such as less than about 240, such as less than about 200, for example less than about 160 or less than about 150, preferably less than about 145.

Conveniently, the compositions for use in the invention are of reduced flammability hazard when compared to R-1132a.

Flammability may be determined in accordance with ASHRAE Standard 34 (e.g. ASHRAE Standard 34:2019).

In one aspect, the compositions have one or more of (a) a higher lower flammable limit; (b) a higher ignition energy (c) a higher auto-ignition temperature; or (d) a lower burning velocity compared to R-1132a alone.

Preferably, the compositions for use in the invention are less flammable compared to R-1132a in one or more of the following respects: lower flammable limit at 23°C; lower flammable limit at 60°C; breadth of flammable range at 23°C or 60°C; auto-ignition temperature (thermal decomposition temperature); minimum ignition energy in dry air or burning velocity. The flammable limits and burning velocity being determined according to the methods specified in ASHRAE-34 and the auto-ignition temperature being determined in a 500ml glass flask by the method of ASTM E659-78.

In a preferred embodiment, the compositions for use in the invention are non-flammable both as formulated and under the fractionation scenarios of ASHRAE Standard 34:2019. For example, the compositions and preferably their "worst case formulations for flammability" are both non-flammable at a test temperature of 60°C using the ASHRAE-34 methodology.

Advantageously, the mixtures of vapour that exist in equilibrium with the compositions at any temperature between about -20°C and 60°C are also non-flammable.

In some applications it may not be necessary for the formulation to be classed as non-flammable by the ASHRAE-34 methodology. It is possible to develop fluids whose flammability limits will be sufficiently reduced in air to render them safe for use in the application, for example if it is physically not possible to make a flammable mixture by leaking the refrigeration equipment charge into the surrounds. A preferred example of such a scenario is where the composition is formulated to be non-flammable but where application of the Standard 34 fractionation methodology would result in generation of a flammable "worst-case formulation for flammability"; where however the scenario is not considered relevant for the application. Similarly, preferred compositions are those which would be classed as non-flammable as formulated but weakly flammable under fractionation (flammability class 1/2L) by the ISO 817 classification standard.

It is believed that the compositions for use in the invention exhibit a completely unexpected combination of low/non-flammability, low GWP, improved lubricant miscibility and improved performance properties when used in refrigeration systems, especially in air-conditioning systems. Some of these properties are explained in more detail below.

Typically, the compositions for use in the present invention have a critical temperature which is about equal to or higher than the critical temperature of CO₂, for example higher than about 40° C.

Conveniently, the compositions for use in the present invention have a volumetric refrigeration capacity that is within at least about 75% of that of CO₂, such as within at least about 80%, for example within at least about 90%.

Advantageously, the compositions for use in the present invention have a coefficient of performance (COP) that is about equal to or higher than that of CO₂.

Typically, the compositions for use in the present invention have an operating pressure in a gas cooler and evaporator that is lower than that of CO₂. The reduction in operating pressures can result in benefits for compressor efficiency and durability, for example by reducing the absolute pressure difference over the compressor, which reduces the load on the machine bearings. Furthermore, this reduced pressure difference can benefit the volumetric efficiency of the compressor.

Conveniently, the compositions for use in the present invention have a temperature glide (defined as the difference between dew point and inlet temperature) in an evaporator which is less than about 12K, such as less than about 10K, for example less than about 8K, preferably less than about 6K.

The compositions for use in the invention are typically suitable for use in existing designs of equipment and are compatible with all classes of lubricants that are currently used with established HFC refrigerants and with R-744. They may be optionally stabilized or compatibilized with mineral oils by the use of appropriate additives.

Preferably, the lubricant is selected from mineral oil, silicon oil, polyalkyl benzenes (PABs), polyol esters (POEs), polyalkylene glycols (PAGs), polyalkylene glycol esters (PAG esters), polyvinyl ethers (PVEs), poly (alpha-olefins) and combinations thereof, preferably wherein the lubricant is selected from PAGs, POEs, PVEs and combinations thereof.

Compositions comprising a lubricant and a composition for use in the invention typically exhibit improved miscibility compared to CO₂ and the same lubricant.

Conveniently, a stabiliser is selected from diene-based compounds, phosphates, phenol compounds and epoxides, and mixtures thereof.

In another aspect of the present invention, the heat transfer system is a refrigeration, heat pump or air-conditioning system.

Preferably, the refrigeration system comprises a commercial refrigeration system (such as a supermarket display refrigeration system, beverage cooler refrigeration system, warehouse refrigeration system or a cold-room refrigeration system), or a transportation refrigeration system (for example a refrigeration system fitted to a refrigerating shipping container or a refrigeration system fitted to a vehicle).

Conveniently, the heat pump system comprises a water heater heat pump system.

Preferably, the air-conditioning system comprises a mobile or transportation air-conditioning system, such as a bus, car, train or truck air-conditioning system.

Advantageously, the heat transfer (e.g. refrigeration, heat pump and/or air-conditioning) systems defined above are operating as transcritical heat transfer systems for at least part of the year.

In some of the applications of transcritical cycle technology, a vapour compression cycle used is a single compression cycle as is typical in mobile air-conditioning applications. In other applications, the gas compression is carried out in two stages, which permits efficient operation over a large temperature difference between heat source and heat sink temperatures. It is believed that the compositions for use in the invention are suitable for use in a single and dual compression stage cycle.

In the present invention, there is provided a use of a composition as an alternative for an existing working fluid in a heat transfer system, such as a new heat transfer system designed to meet the same application requirements.

The existing working fluid is R-410A or R-407C.

In another aspect of the present invention, the heat transfer system is a transcritical heat transfer device, such as a transritical refrigeration, heat pump or air-conditioning device.

Optionally, the transcritical heat transfer system comprises an internal heat exchanger (IHX) system.

The transcritical heat transfer system may also comprise a liquid accumulator positioned after the evaporator, or, if the IHX is present, between the evaporator and the IHX.

All the chemicals described herein are commercially available. For example, fluorochemicals may be purchased from Apollo Scientific (UK).

The compositions for use in the invention may be prepared by simply mixing CO₂, R-32 and the third component (and optional components, such as R-1132a and/or a lubricant) in the desired proportions. The compositions can then be added to a heat transfer device or used in any other way as described herein.

The present invention is illustrated by the following non-limiting examples.

### EXAMPLES

The vapour liquid equilibrium behaviour of CO₂ with R-32 and with R-134a at certain temperatures is described in the academic literature. The vapour liquid equilibrium behaviour of CO₂ with R134a, and of R-1132a with CO₂ ,R-32 and R-134a was studied experimentally in the temperature range -40°C to +70°C using constant-volume equilibrium apparatus. The resulting data were used to fit binary interaction parameters for each binary pair for use with the NIST REFPROP9.1 and REFLEAK5.1 software codes. The principle of measurement of this experimental work was the determination of vapour pressure for a series of known compositions over a range of temperatures, followed by regression to the thermodynamic model to minimise the difference between calculated and observed pressure over the data set.

Subsequently, a series of ternary compositions of CO₂/R-32/R-134a were subjected to a fractionation assessment following the general outline given in ASHRAE Standard 34 and using the REFPROP property library to model the refrigerant behaviour. The "worst case scenario" was taken as the leakage of vapour isothermally at -40°C from a cylinder initially charged with 90% of the maximum allowable fill quantity of material. The leakage was modelled to simulate a loss of 95% of the initial mass. The maximum allowable fill was determined using the liquid density calculated at the temperature specified in the standard for modelling fluids with a critical temperature below 54.4°C.

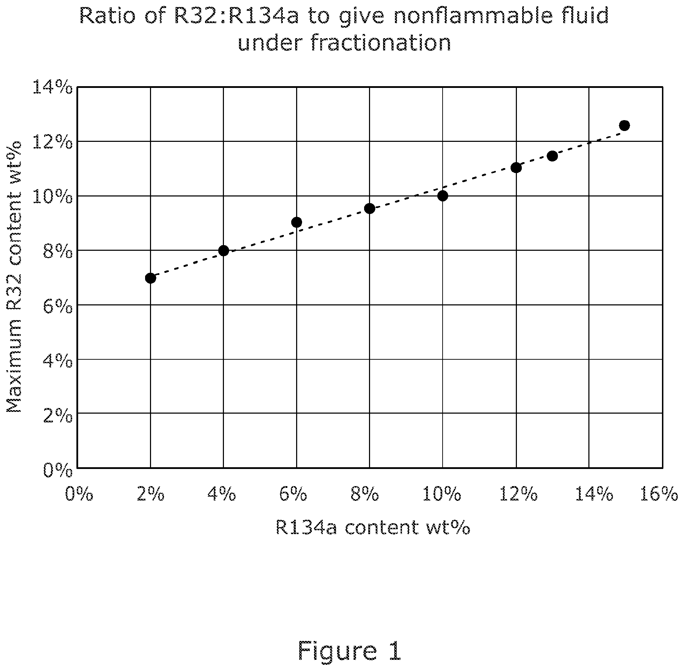

Figure 1 shows the maximum content of R-32 that could be included in a composition without the fractionation generating a flammable composition as a function of the content of R-134a (from 0 to 15 weight %).

Standard refrigeration cycle modelling techniques were then used to estimate the performance of selected compositions for use in the invention in the range of from about 4 to about 14 weight % of R-134a. The R-32 content was selected according to Figure 1 to give a composition that would remain non-flammable under fractionation.

The cycle modelled was a transcritical cycle using an internal heat exchanger (IHX) to exchange heat between the gas leaving the gas cooler and the low-pressure vapour leaving the evaporator.

The performance of CO₂ was also calculated as a comparative example. The cycle conditions were chosen to ensure that CO₂ was operating as a transcritical refrigerant in the cycle. The gas cooler pressure in the cycle was optimised to maximise Coefficient of Performance (COP) of the mixture.

The following conditions were assumed for the modelling purposes:

**Table 1: Model input conditions**

| | | |
|---|---|---|
| Air temperature rise over gas cooler | 10 | K |
| Air on temperature | 33 | °C |
| Air off temperature | 43 | °C |
| Temperature approach in gas cooler | 4 | K |
| Capacity | 6 | kW |
| Mean evaporation temperature | 7 | °C |
| Evaporator superheat | 0 | K |
| Suction line heat gain across IHX | 20 | K |
| isentropic efficiency | 65% | |

The results are shown in Table 2 below.

From the performance data, it can be seen that the ternary compositions modelled have superior energy efficiency and reduced operating pressures compared to CO₂. In addition, the GWP of the compositions is less than about 300.

Furthermore, it can be seen that it is not desirable to add more than about 15% R-134a by weight in these compositions because the temperature glide in the evaporator becomes greater than 11K.

The ternary compositions for use in the invention may be further augmented by the addition of R-1132a, for example by substitution of a portion of the CO₂ content with R-1132a so that the R-1132a content is between 1% and 15% by weight without generating a flammable composition during fractionation. Addition of R-1132a reduces compressor discharge temperature and reduces the temperature glide in the evaporator. The modelling results for a selected composition comprising R-1132a are shown in Table 3 below.

**Table 2: Compositions comprising CO₂, R-32 and R-134a.**

| | | | | | | | | | |
|---|---|---|---|---|---|---|---|---|---|
| | **R744** | 100.0% | 88.0% | 85.0% | 83.0% | 80.0% | 77.0% | 74.0% | 72.5% |
| | **R32** | 0.0% | 8.0% | 9.0% | 9.0% | 10.0% | 11.0% | 12.0% | 12.5% |
| | **R134a** | 0.0% | 4.0% | 6.0% | 8.0% | 10.0% | 12.0% | 14.0% | 15.0% |
| Coefficient of performance (COP) | | 2.69 | 2.84 | 2.88 | 2.90 | 2.95 | 2.98 | 3.01 | 3.02 |
| Volumetric refrigeration capacity (Qᵥₒₗ) | kJ/m³ | 14497 | 13220 | 12860 | 12593 | 12404 | 12277 | 12106 | 12022 |
| Compressor discharge temperature (T_{dis}) | °C | 102.6 | 105.6 | 106.2 | 106.7 | 108.0 | 110.1 | 112.0 | 112.9 |
| Evaporator pressure (Pₑᵥ) | bar | 41.8 | 35.5 | 33.9 | 32.9 | 31.4 | 30.0 | 28.7 | 28.1 |
| Condenser pressure (P_{co}) | bar | 90.2 | 77.8 | 74.8 | 72.7 | 70.4 | 68.6 | 66.9 | 66.0 |
| Evaporator temperature glide ΔTₑᵥ | K | 0.0 | 4.4 | 5.7 | 6.8 | 8.3 | 9.7 | 11.1 | 11.8 |
| COP relative to R-744 | | 100.0% | 105.8% | 107.3% | 108.0% | 109.8% | 110.9% | 111.9% | 112.5% |
| Capacity relative to R-744 | | 100.0% | 91.2% | 88.7% | 86.9% | 85.6% | 84.7% | 83.5% | 82.9% |
| Global Warming Potential (AR5 basis) | | 1 | 107 | 140 | 166 | 199 | 231 | 264 | 280 |

**Table 3: A composition comprising CO₂, R-32, R-134a and R-1132a**

| | | |
|---|---|---|
| **R744** | | 65% |
| **R1132a** | | 15% |
| **R32** | | 10% |
| **R134a** | | 10% |
| COP | | 2.85 |
| Qvol | kJ/m³ | 11531 |
| Tdis | °C | 103.7 |
| Pev | bar | 30.5 |
| Pco | bar | 68.3 |
| DTev | K | 7.8 |
| | | |
| COP relative to CO2 | | 106.1% |
| Capacity relative to CO2 | | 79.5% |
| GWP (AR5 basis) | | 198 |

## Claims

1. Use of a composition as an alternative for an existing working fluid in a heat transfer system, wherein the composition comprises:
(a) from about 62 to about 98 weight % carbon dioxide (R-744, CO₂);
(b) difluoromethane (R-32); and
(c) a third component selected from 1,1,1,2-tetrafluoroethane (R-134a), *trans*-1,3,3,3-tetrafluoropropene (R-1234ze(E)), 2,3,3,3-tetrafluoropropene (R-1234yf), 1,1,1,2,3,3,3-heptafluoropropane (R-227ea) and mixtures thereof,
wherein the existing working fluid is R-410A or R-407C,
further wherein the composition comprises substantially no 1,1,2-trifluoroethylene (R-1123).

2. The use according to claim 1, wherein the third component is R-134a and one or more of R-1234yf, R-1234ze(E) and R-227ea.

3. The use according to claim 1, wherein the third component is one or more of R-1234yf or R-1234ze(E).

4. The use according to claim 1, wherein the third component is one or more of R-1234yf, R-1234ze(E) and R-227ea.

5. The use according to any of the preceding claims, wherein the composition comprises from about 65 to about 98 weight % CO₂, such as from about 69 or about 71 to about 97 weight %, for example from about 74 or about 77 to about 96 weight % or from about 81 to about 96 weight %, optionally from about 81 or about 84 to about 95 weight %.

6. The use according to any of the preceding claims, wherein the composition comprises from about 1 to about 25 weight % R-32, such as from about 2 to about 22 weight %, for example from about 3 to about 19 weight %, optionally from about 4 weight % to about 15 or about 13 weight % or from about 5 weight % to about 11 weight %

7. The use according to any of the preceding claims, wherein the composition comprises from about 1 to about 20 weight % of the third component, such as from about 2 or about 3 to about 15 weight %, for example from about 4 to about 13 weight %, optionally from about 5 to about 11 weight %.

8. The use according to claim 1 wherein the composition comprises, optionally consists essentially of, from about 65 to about 95 weight % CO₂, from about 5 to about 15 weight % R-32 and from about 2 to about 20 weight % R-134a.

9. The use according to claim 8 wherein the CO₂ is present in the composition in amount of from about 70 to about 91 weight %, the R-32 is present in an amount of from about 6 to about 14 weight % and the R-134a is present in an amount of from about 3 to about 16 weight %; preferably wherein the CO₂ is present in amount of from about 72 to about 88 weight %, the R-32 is present in an amount of from about 8 to about 13 weight % and the R-134a is present in an amount of from about 4 to about 15 weight %.

10. The use according to any of the preceding claims, wherein the composition additionally comprises 1,1-difluoroethylene (R-1132a), such as wherein the composition comprises from about 1 to about 20 weight % R-1132a, such as from about 2 to about 15 weight %, for example from about 3 to about 12 weight % or from about 4 or about 5 to about 10 weight %.

11. The use according to any of the preceding claims, wherein the composition consists essentially of the stated components.

12. The use according to any of the preceding claims, wherein the composition is non-flammable as formulated, such as wherein the composition is not flammable as determined in accordance with ASHRAE Standard 34:2019;
and/or wherein the composition has a Global Warming Potential (GWP) of less than about 300, such as less than about 240, such as less than about 200, for example less than about 160 or less than about 150, preferably less than about 145;
and/or wherein the composition has a critical temperature which is about equal to or higher than the critical temperature of CO₂, for example higher than about 40° C;
and/or wherein the composition has a volumetric refrigeration capacity that is within at least about 75% of that of CO₂, such as within at least about 80%, for example within at least about 90%;
and/or wherein the composition has a coefficient of performance (COP) that is about equal to or higher than that of CO₂;
and/or wherein the composition has an operating pressure in a gas cooler or evaporator that is lower than that of CO₂;
and/or wherein the composition has a temperature glide in an evaporator or condenser which is less than about 12K, such as less than about 10K, for example less than about 8K, preferably less than about 6K.

13. The use according to any of the preceding claims, wherein the composition is combined with a lubricant, preferably wherein the lubricant is selected from mineral oil, silicon oil, polyalkyl benzenes (PABs), polyol esters (POEs), polyalkylene glycols (PAGs), polyalkylene glycol esters (PAG esters), polyvinyl ethers (PVEs), poly (alpha-olefins) and combinations thereof, such as wherein the lubricant is selected from PAGs, POEs, PVEs and combinations thereof.

14. The use according to any of the preceding claims, wherein the heat transfer system is a refrigeration, heat pump or air-conditioning system,
such as wherein the heat transfer system operates as a transcritical heat transfer system for at least part of the year;
and/or wherein the refrigeration system comprises a commercial refrigeration system, such as a supermarket display refrigeration system, beverage cooler refrigeration system, warehouse refrigeration system or a cold-room refrigeration system;
and/or wherein the refrigeration system comprises a transportation refrigeration system, such as a refrigeration system fitted to a refrigerating shipping container or a refrigeration system fitted to a vehicle;
and/or wherein the heat pump system comprises a water heater heat pump system;
and/or wherein the air-conditioning system comprises a mobile or transportation air-conditioning system, such as a bus, car, train or truck air-conditioning system.

15. The use according to any of the preceding claims, wherein the heat transfer system is a transcritical heat transfer device, such as a transcritical refrigeration, heat pump or air-conditioning device.

## Patentansprüche

1. Verwendung einer Zusammensetzung als Alternative für ein bestehendes Arbeitsfluid in einem Wärmeübertragungssystem, wobei die Zusammensetzung umfasst:
(a) von etwa 62 bis etwa 98 Gew.-% Kohlendioxid (R-744, CO₂) ;
(b) Difluormethan (R-32); und
(c) eine dritte Komponente, ausgewählt aus 1,1,1,2-Tetrafluorethan (R-134a), trans-1,3,3,3-Tetrafluorpropen (R-1234ze(E)), 2,3,3,3-Tetrafluorpropen (R-1234yf), 1,1,1,2,3,3,3-Heptafluorpropan (R-227ea) und Mischungen davon,
wobei das bestehende Arbeitsfluid R-410A oder R-407C ist, wobei ferner die Zusammensetzung im Wesentlichen kein 1,1,2-Trifluorethylen (R-1123) umfasst.

2. Verwendung nach Anspruch 1, wobei die dritte Komponente R-134a und eines oder mehrere von R-1234yf, R-1234ze(E) und R-227ea ist.

3. Verwendung nach Anspruch 1, wobei die dritte Komponente eines oder mehrere von R-1234yf oder R-1234ze(E) ist.

4. Verwendung nach Anspruch 1, wobei die dritte Komponente eines oder mehrere von R-1234yf, R-1234ze(E) und R-227ea ist.

5. Verwendung nach einem der vorstehenden Ansprüche, wobei die Zusammensetzung von etwa 65 bis etwa 98 Gew.-% CO₂ umfasst, wie von etwa 69 oder etwa 71 bis etwa 97 Gew.-%, beispielsweise von etwa 74 oder etwa 77 bis etwa 96 Gew.-% oder von etwa 81 bis etwa 96 Gew.-%, optional von etwa 81 oder etwa 84 bis etwa 95 Gew.-%.

6. Verwendung nach einem der vorstehenden Ansprüche, wobei die Zusammensetzung von etwa 1 bis etwa 25 Gew.-% R-32 umfasst, wie von etwa 2 bis etwa 22 Gew.-%, beispielsweise von etwa 3 bis etwa 19 Gew.-%, optional von etwa 4 Gew.-% bis etwa 15 oder etwa 13 Gew.-% oder von etwa 5 Gew.-% bis etwa 11 Gew.-%

7. Verwendung nach einem der vorstehenden Ansprüche, wobei die Zusammensetzung von etwa 1 bis etwa 20 Gew.-% der dritten Komponente umfasst, wie von etwa 2 oder etwa 3 bis etwa 15 Gew.-%, beispielsweise von etwa 4 bis etwa 13 Gew.-%, optional von etwa 5 bis etwa 11 Gew.-%.

8. Verwendung nach Anspruch 1, wobei die Zusammensetzung von etwa 65 bis etwa 95 Gew.-% CO₂, von etwa 5 bis etwa 15 Gew.-% R-32 und von etwa 2 bis etwa 20 Gew.-% R-134a umfasst, optional im Wesentlichen daraus besteht.

9. Verwendung nach Anspruch 8, wobei das CO₂ in der Zusammensetzung in einer Menge von etwa 70 bis etwa 91 Gew.-% vorhanden ist, das R-32 in einer Menge von etwa 6 bis etwa 14 Gew.-% vorhanden ist und das R-134a in einer Menge von etwa 3 bis etwa 16 Gew.-% vorhanden ist; vorzugsweise wobei das CO₂ in einer Menge von etwa 72 bis etwa 88 Gew.-% vorhanden ist, das R-32 in einer Menge von etwa 8 bis etwa 13 Gew.-% vorhanden ist und das R-134a in einer Menge von etwa 4 bis etwa 15 Gew.-% vorhanden ist.

10. Verwendung nach einem der vorstehenden Ansprüche, wobei die Zusammensetzung zusätzlich 1,1-Difluorethylen (R-1132a) umfasst, wie wobei die Zusammensetzung von etwa 1 bis etwa 20 Gew.-% R-1132a umfasst, wie von etwa 2 bis etwa 15 Gew.-%, beispielsweise von etwa 3 bis etwa 12 Gew.-% oder von etwa 4 oder etwa 5 bis etwa 10 Gew.- %.

11. Verwendung nach einem der vorstehenden Ansprüche, wobei die Zusammensetzung im Wesentlichen aus den angegebenen Komponenten besteht.

12. Verwendung nach einem der vorstehenden Ansprüche, wobei die Zusammensetzung wie formuliert nicht entflammbar ist, wie wobei die Zusammensetzung nicht entflammbar ist, wie gemäß ASHRAE-Standard 34:2019 bestimmt;
und/oder wobei die Zusammensetzung ein Treibhauspotenzial (THP) von weniger als etwa 300 aufweist, wie weniger als etwa 240, wie weniger als etwa 200, beispielsweise weniger als etwa 160 oder weniger als etwa 150, vorzugsweise weniger als etwa 145;
und/oder wobei die Zusammensetzung eine kritische Temperatur aufweist, die etwa gleich oder höher als die kritische Temperatur von CO₂ ist, beispielsweise höher als etwa 40 °C;
und/oder wobei die Zusammensetzung eine volumetrische Kälteleistung aufweist, die innerhalb von mindestens etwa 75 % der von CO₂ liegt, wie innerhalb von mindestens etwa 80 %, beispielsweise innerhalb von mindestens etwa 90 %;
und/oder wobei die Zusammensetzung einen Leistungskoeffizienten (Coefficient of Performance, COP) aufweist, der etwa gleich oder höher als der von CO₂ ist;
und/oder wobei die Zusammensetzung einen Betriebsdruck in einem Gaskühler oder Verdampfer aufweist, der niedriger als der von CO₂ ist;
und/oder wobei die Zusammensetzung einen Temperatur-Glide in einem Kondensator oder Verdampfer aufweist, der weniger als etwa 12 K beträgt, wie weniger als etwa 10 K, beispielsweise weniger als etwa 8 K, vorzugsweise weniger als etwa 6 K.

13. Verwendung nach einem der vorstehenden Ansprüche, wobei die Zusammensetzung mit einem Schmiermittel kombiniert ist, vorzugsweise wobei das Schmiermittel ausgewählt ist aus Mineralöl, Silikonöl, Polyalkylbenzolen (PABs), Polyolestern (POEs), Polyalkylenglykolen (PAGs), Polyalkylenglykolestern (PAG-Estern), Polyvinylethern (PVEs), Poly(alpha-olefinen) und Kombinationen davon, wie wobei das Schmiermittel ausgewählt ist aus PAGs, POEs, PVEs und Kombinationen davon.

14. Verwendung nach einem der vorstehenden Ansprüche, wobei das Wärmeübertragungssystem ein Kühl-, Wärmepumpen- oder Klimaanlagensystem ist,
wie wobei das Wärmeübertragungssystem für mindestens einen Teil des Jahres als ein transkritisches Wärmeübertragungssystem arbeitet;
und/oder wobei das Kühlsystem ein gewerbliches Kühlsystem umfasst, wie ein Supermarkt-Kühlregalsystem, ein Getränkekühler-Kühlsystem, ein Lagerkühlsystem oder ein Kühlraum-Kühlsystem;
und/oder wobei das Kühlsystem ein Transportkühlsystem umfasst, wie ein Kühlsystem, das in einen Kühlversandcontainer eingebaut ist, oder ein Kühlsystem, das in ein Fahrzeug eingebaut ist;
und/oder wobei das Wärmepumpensystem ein Warmwasserbereiter-Wärmepumpensystem umfasst;und/oder wobei das Klimaanlagensystem ein mobiles oder Transport-Klimaanlagensystem umfasst, wie ein Bus-, Pkw-, Zug- oder Lkw-Klimaanlagensystem.

15. Verwendung nach einem der vorstehenden Ansprüche, wobei das Wärmeübertragungssystem eine transkritische Wärmeübertragungsvorrichtung ist, wie eine transkritische Kühl-, Wärmepumpen- oder Klimaanlagenvorrichtung.

## Revendications

1. Utilisation d'une composition comme une alternative à un fluide de travail existant dans un système de transfert de chaleur, dans laquelle la composition comprend :
(a) d'environ 62 à environ 98 % en poids de dioxyde de carbone (R-744, CO₂) ;
(b) du difluorométhane (R-32) ; et
(C) un troisième composant choisi parmi le 1,1,1,2-tétrafluoroéthane (R-134a), *le trans*-1,3,3,3-tétrafluoropropène (R-1234ze(E)), le 2,3,3,3-tétrafluoropropène (R-1234yf), le 1,1,1,2,3,3,3-heptafluoropropane (R-227ea) et les mélanges de ceux-ci, dans laquelle le fluide de travail existant est le R-410A ou le R-407C,
dans laquelle en outre la composition ne comprend sensiblement pas de 1,1,2-trifluoroéthylène (R-1123).

2. Utilisation selon la revendication 1, dans laquelle le troisième composant est le R-134a et un ou plusieurs parmi R-1234yf, R-1234ze(E) et R-227ea.

3. Utilisation selon la revendication 1, dans laquelle le troisième composant est un ou plusieurs parmi R-1234yf ou R-1234ze(E).

4. Utilisation selon la revendication 1, dans laquelle le troisième composant est un ou plusieurs parmi R-1234yf, R-1234ze(E) et R-227ea.

5. Utilisation selon l'une quelconque des revendications précédentes, dans laquelle la composition comprend d'environ 65 à environ 98 % en poids de CO₂, tel que d'environ 69 ou d'environ 71 à environ 97 % en poids, par exemple d'environ 74 ou d'environ 77 à environ 96 % en poids ou d'environ 81 à environ 96 % en poids, éventuellement d'environ 81 ou d'environ 84 à environ 95 % en poids.

6. Utilisation selon l'une quelconque des revendications précédentes, dans laquelle la composition comprend d'environ 1 à environ 25 % en poids de R-32, tel que d'environ 2 à environ 22 % en poids, par exemple d'environ 3 à environ 19 % en poids, éventuellement d'environ 4 % en poids à environ 15 % en poids ou environ 13 % en poids, ou d'environ 5 % en poids à environ 11 % en poids

7. Utilisation selon l'une quelconque des revendications précédentes, dans laquelle la composition comprend d'environ 1 à environ 20 % en poids du troisième composant, tel que d'environ 2 ou d'environ 3 à environ 15 % en poids, par exemple d'environ 4 à environ 13 % en poids, éventuellement d'environ 5 à environ 11 % en poids.

8. Utilisation selon la revendication 1, dans laquelle la composition comprend, éventuellement essentiellement, d'environ 65 à environ 95 % en poids de CO₂, d'environ 5 à environ 15 % en poids de R-32 et d'environ 2 à environ 20 % en poids de R-134a.

9. Utilisation selon la revendication 8, dans laquelle le CO₂ est présent dans la composition dans une proportion d'environ 70 à environ 91 % en poids, le R-32 est présent dans une proportion d'environ 6 à environ 14 % en poids et le R-134a est présent dans une proportion d'environ 3 à environ 16 % en poids ; de préférence, dans laquelle le CO₂ est présent dans une proportion d'environ 72 à environ 88 % en poids, le R-32 est présent dans une proportion d'environ 8 à environ 13 % en poids et le R-134a est présent dans une proportion d'environ 4 à environ 15 % en poids.

10. Utilisation selon l'une quelconque des revendications précédentes, dans laquelle la composition comprend en outre du 1,1-difluoroéthylène (R-1132a), telle que, dans laquelle la composition comprend environ 1 à environ 20 % en poids de R-1132a, tel que d'environ 2 à environ 15 % en poids, par exemple d'environ 3 à environ 12 % en poids ou d'environ 4 ou environ 5 à environ 10 % en poids.

11. Utilisation selon l'une quelconque des revendications précédentes, dans laquelle la composition est essentiellement constituée des composants mentionnés.

12. Utilisation selon l'une quelconque des revendications précédentes, dans laquelle la composition est ininflammable telle que formulée, par exemple dans laquelle la composition est ininflammable telle que déterminée conformément à la norme ASHRAE 34:2019 ;
et/ou dans laquelle la composition a un potentiel de réchauffement global (PRG) de moins d'environ 300, tel que moins d'environ 240, tel que moins d'environ 200, par exemple moins d'environ 160 ou moins d'environ 150, de préférence moins d'environ 145 ;
et/ou dans laquelle la composition a une température critique qui est à peu près égale ou supérieure à la température critique du CO₂, par exemple supérieure à environ 40° C ;
et/ou dans laquelle la composition a une capacité de réfrigération volumétrique qui se situe à au moins environ 75 % de celle du CO₂, telle qu'à au moins environ 80 %, par exemple à au moins environ 90 % ;
et/ou dans laquelle la composition a un coefficient de performance (COP) qui est à peu près égal ou supérieur à celui du CO₂ ;
et/ou dans laquelle la composition a une pression de fonctionnement dans un refroidisseur de gaz ou un évaporateur qui est inférieure à celle du CO₂ ;
et/ou dans laquelle la composition a un glissement de température dans un évaporateur ou un condenseur inférieur à environ 12 K, tel qu'inférieur à environ 10 K, par exemple inférieur à environ 8 K, de préférence inférieur à environ 6 K.

13. Utilisation selon l'une quelconque des revendications précédentes, dans laquelle la composition est associée à un lubrifiant, de préférence dans laquelle le lubrifiant est choisi parmi l'huile minérale, l'huile de silicone, les polyalkylbenzènes (PAB), les esters de polyol (POE), les polyalkylèneglycols (PAG), les esters de polyalkylèneglycol (esters de PAG), les polyéthers de vinyle (PVE), les poly(alpha-oléfines) et des combinaisons de ceux-ci, telle que dans laquelle le lubrifiant est choisi parmi les PAG, les POE, les PVE et des combinaisons de ceux-ci.

14. Utilisation selon l'une quelconque des revendications précédentes, dans laquelle le système de transfert de chaleur est un système de réfrigération, de pompe à chaleur ou de climatisation,
telle que, dans laquelle, le système de transfert de chaleur fonctionne comme un système de transfert de chaleur transcritique pendant au moins une partie de l'année ;
et/ou dans laquelle le système de réfrigération comprend un système de réfrigération commercial, tel qu'un système de réfrigération pour les rayons de supermarché, un système de réfrigération de refroidisseur de boissons, un système de réfrigération d'entrepôt ou un système de réfrigération de chambre froide ;
et/ou dans laquelle le système de réfrigération comprend un système de réfrigération de transport, tel qu'un système de réfrigération monté sur un conteneur d'expédition réfrigéré ou un système de réfrigération monté sur un véhicule ;
et/ou dans laquelle le système de pompe à chaleur comprend un système de pompe à chaleur pour chauffe-eau ;
et/ou dans laquelle le système de climatisation comprend un système de climatisation mobile ou de transport, tel qu'un système de climatisation d'autobus, de voiture, de train ou de camion.

15. Utilisation selon l'une quelconque des revendications précédentes, dans laquelle le système de transfert de chaleur est un dispositif de transfert de chaleur transcritique, tel qu'un dispositif de réfrigération, de pompe à chaleur ou de climatisation transcritique.
